Europäisches Patentamt

European Patent Office

Office européen des brevets

(19)

(11) EP 1 052 788 A1

(12) EUROPEAN PATENT APPLICATION

(43) Date of publication:
15.11.2000 Bulletin 2000/46

(51) Int Cl.⁷: H04B 7/185

(21) Application number: 99303731.6

(22) Date of filing: 13.05.1999

(84) Designated Contracting States:
AT BE CH CY DE DK ES FI FR GB GR IE IT LI LU
MC NL PT SE
Designated Extension States:
AL LT LV MK RO SI

(71) Applicant: ICO Services Ltd.
London W6 9BN (GB)

(72) Inventor: Grayson, Mark
Chiswick, London W4 2QT (GB)

(74) Representative: Geary, Stuart Lloyd et al
Venner, Shipley & Co.,
20 Little Britain
London EC1A 7DH (GB)

(54) **Broadcast control channel reception in a mobile satellite telephone system**

(57) In order to enable to use of less sophisticated frequency synthesizer in mobile stations (UT 1) of a satellite mobile telephone network, without increasing the time required to find a network, broadcast control channel (BCCH) signals are pre-compensated for Doppler shift. The pre-compensation means that the BCCH for a cell will always fall within the receiver bandwidth of a mobile station (UT 1) tuned to the nominal BCCH frequency.

FIG. 1

## Description

The present invention relates to the transmission and reception of broadcast control channel signals in a satellite mobile telephone system.

Terrestrial mobile telecommunications systems are well known and a number of different systems have developed which operate according to different standards, both analogue and digital. In Europe and the Far East, excluding Japan and South Korea, and elsewhere, the digital Global System for Mobile communication (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0365885 and US Patent No. 5 394 561 (Motorola™), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10 000-20 000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communications networks, ground stations are located at different sites around the world in order to communicate with the orbiting satellites and local PLMNs. In the ICO™ system and others, a visitor location register is associated with each of the satellite ground stations to register locally the individual user terminals. The visitor location registers communicate with a home location register for the satellite network.

The satellite constellation can be configured so that for any location of user terminal on the earth, more than one satellite is at an elevation of more than 10 degrees above the horizon and hence two satellites are usually available for communication concurrently with the user terminal. The availability of more than satellite permits so-called diversity operations in which a traffic logical channel can be transmitted between the ground and the user terminal concurrently via two satellites, in two paths, to mitigate effects of blockage and fading. Diversity operation is described in GB-A-2 293 725, EP-A-0 837 568 and PCT/US96/19429.

The length of two paths from the ground to the user terminal via the satellites differs substantially with time as a result of orbital movement of the satellites. Also, the satellite movement introduces a Doppler shift in the transmitted signals. Thus, link control needs to be carried out in order to pre-compensate the timing and frequency of the transmitted signals in order that they arrive in a synchronised pattern via the two paths, within a predefined frequency band, in order that detection can reliably occur for signals transmitted over both of the paths.

A mobile station of a mobile telephone system will typically have a receiver local oscillator that can be tuned with a certain accuracy. Any errors in the local oscillator tuning will manifest themselves are frequency offsets. Generally, the cheaper the oscillator, the greater the offset.

In a conventional GSM system, it is assumed that signals are transmitted at their nominal frequencies and any errors above those due oscillator tuning error are due to mobile station movement. Terrestrial mobile telephone systems generally only operate with mobile station speeds up to 250kph which puts an upper limit on this offset.

Following power on, the mobile station must synchronise with the network which involves aligning with network transmissions in time and frequency. The "capture range" of such techniques is approximately limited to ½ the symbol rate due to filtering constraints. The symbol rates in terrestrial systems are usually large.

In satellite mobile telephone systems proposed hitherto, the symbol rates are more often low. In addition, the received transmissions suffer from large amounts of Doppler shift due to satellite movement. The Doppler shift is of a similar magnitude to the symbol rate.

Taking for example, a satellite mobile telephone system which transmits to mobile stations at approximately 2GHz from a medium earth orbit, the Doppler shift can be as much as ±11kHz. If the symbol rate is 18ksymbols/s, an 18kHz receiver bandwidth is required. Now, with an oscillator tuning accuracy of 3.5ppm, the receiver can be ±7kHz off frequency. Consequently, a signal to be received may be ±18kHz of the actual frequency to which the receiver is tuned. Thus, the signal to be received often falls outside the bandwidth of the receiver. This problem is addressed by searching for signals at nominal + 9kHz, then nominal and then nominal - 9kHz. This is undesirable because it increases the time taken to tune to the signal and increases the complexity of the mobile station.

It is an aim of the present invention to overcome this problem.

According to the present invention, there is provided a method of transmitting broadcast control channel signals in a satellite mobile telephone system, the method comprising the steps of:

determining the Doppler shift experienced by signals from a satellite to a position in a cell served by the satellite; and

transmitting a signal from a base station to the satellite so as to cause the satellite to transmit a broadcast control channel signal to said cell using a frequency set in dependence on said Doppler shift to compensate therefor.

The signal transmitted from the base station to the satellite may comprise tuning instructions for a transmitter in the satellite. Alternatively, if the satellite merely transposes and retransmits signals from the base station, this signal may comprise a broadcast control channel signal in an uplink channel which is itself pre-compensated such that the signal retransmitted from the satellite is pre-compensated for Doppler shift.

A mobile station for use in a satellite mobile telephone system, in which a broadcast control channel signal is transmitted according to the present invention, the mobile station including a receiver, including a local oscillator and having a predetermined bandwidth which a greater than twice the sum of the tuning inaccuracy of the local oscillator and the greatest uncompensated Doppler shift experienced in a cell served by said satellite, and a controller, wherein the controller is configured for causing the local oscillator to tune the receiver to one frequency only when searching for a broadcast control channel having a particular nominal frequency. Thus, the mobile station need only tune to one frequency when searching for a signal having a particular nominal frequency.

"Mobile station" is used to distinguish a user terminal equipment from a base station as is common in the art. However, it is not essential that the mobile station actually be mobile or portable.

An embodiment of the present invention will now be described, by way of example, with reference to the accompanying drawings, in which:-

Figure 1 is a schematic diagram of a satellite telecommunications system together with a local, land-based mobile telecommunications system, in accordance with the invention;

Figure 2 is a schematic diagram of the spot beam pattern produced by one of the satellites on the earth;

Figure 3 illustrates schematically different beam types and their associated cellular areas and Z-arcs, from the pattern shown in Figure 2;

Figure 4 is a schematic frequency/time diagram illustrating time slots for the TDMA transmission scheme;

Figure 5 is a schematic block diagram of the circuits of satellite 3a;

Figure 6 is a schematic diagram of the cell pattern produced by the spot beams of satellites 3a, 3b;

Figure 7 is a schematic diagram of a mobile user terminal;

Figure 8 is a schematic block diagram of the circuits of the user terminal shown in Figure 7;

Figure 9 is a schematic block diagram of SBS 1 shown in Figure 1; and

Figure 10 is a schematic diagram of TDMA signals transmitted between the satellites and the user terminal.

**Overview of network**

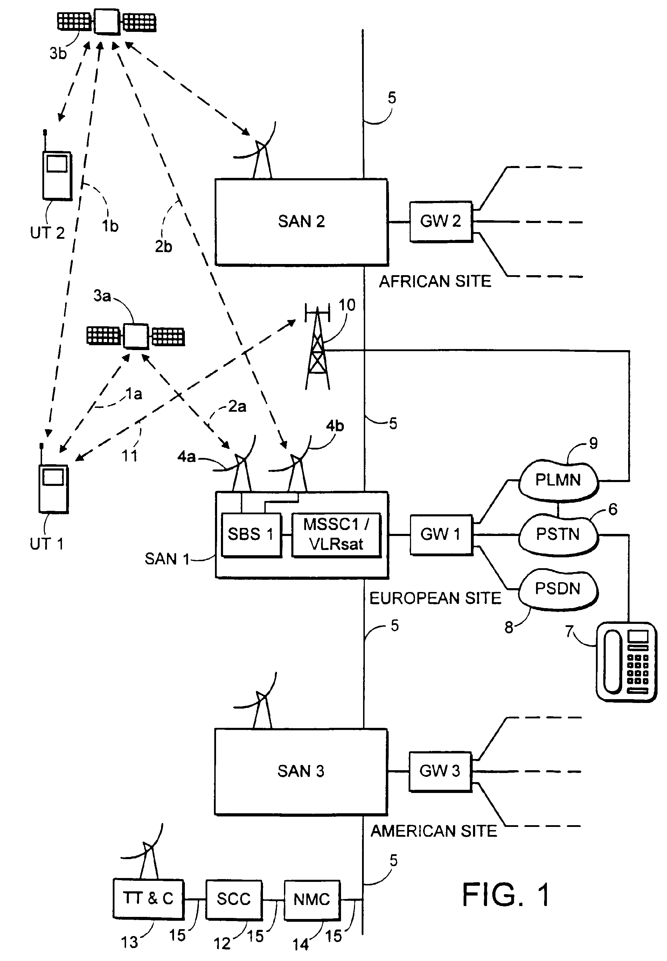

Referring to Figure 1, a schematic block diagram of a satellite mobile telecommunications network is shown corresponding to the ICO network. A mobile user terminal UT 1 in the form of a mobile telephone handset can communicate on a radio channel over a communication path 1a, 2a via an earth orbiting satellite 3a with a land-based satellite access node SAN 1. As shown schematically in Figure 1, SAN 1 is provided with a dish antenna arrangement that includes antenna 4a which can track the orbiting satellite 3a.

A number of the satellite access nodes SAN 1, 2, 3, etc. are connected together to form a backbone network 5, which is connected through a number of gateways GW 1, 2, 3, etc. to conventional land-based telephone networks. For example, the gateway GW 1, is connected to a land-based public switch telephone network (PSTN) 6, which permits connection to be made to a conventional telephone set 7. The gateway GW1 is additionally connected to a public switched data network (PSDN) 8 and a public land mobile network (PLMN) 9. Each of the gateways GW1, 2, 3 may comprise existing International Switching Centres (ISCs) or mobile switching centres (MSCs) of the type used in GSM mobile networks.

As shown in Figure 1, the handset UT 1 is a dual mode device which can also communicate with the conventional land-based mobile network PLMN 9, that is shown schematically to include a transceiver station 10 which establishes a duplex link 11 with the user terminal UT 1. In this example, the PLMN 9 is a GSM network. Thus the user can for example roam to the satellite network when out of range of the PLMN 9.

For a fuller understanding of GSM, reference is directed to the various GSM Recommendations issued by the European Telecommunications Institute (ETSI). Also reference is directed to "The GSM System for Mobile Communications" supra, for a more readable overview.

The satellite network is designed to provide world-wide coverage and the satellite 3a forms part of a constellation of satellites, which may be arranged in several orbits. The satellites may be arranged in a MEO constellation, for example with an orbital radius of 10 355 km, although the invention is not restricted to a particular orbital radius or indeed satellite mobile telephone systems. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing more than one concurrent communication path to the user terminal from a particular SAN. Additional satellites may be included in the constellation in order to provide redundancy.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only two of the dish antennas 4a, 4b for SAN 1 are shown in Figure 1 and only one dish is shown for the other SANs, in order to simplify the drawing. The dish antennas permit diverse communication paths to be established between the SANs and an individual user terminals via different satellites. In this example, the first communication path 1a, 2a is set up between dish antenna 4a of SAN 1 and user terminal UT 1 via satellite 3a, and a second communication path 1b, 2b is set.up between dish antenna 4b of SAN 1 and user terminal UT 1 via satellite 3b, thus providing first and second diverse paths for concurrent communication of signal traffic between the satellite and the user terminal.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, demultiplexer and codecs, which will be described in more detail later. A mobile satellite switching centre MSSC 1 is coupled to SBS 1 and includes a satellite visitor location register VLRSAT 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW 1 so as to provide a connection to PLMN 9, PSDN 8 and PSTN 6. It will be understood that all the SANs are of similar construction with a respective VLRSAT to maintain a record of the subscribers registered, namely the identity of each user that is making use of the SAN 1 for signal communication.

In Figure 1, the SAN 2 is shown communicating with user terminal UT 2 via satellite 3b. For further details of the network, reference is directed to GB-A-2 295 296 and EP-A-0869628.

The satellites 3a, 3b are in non geostationary orbits and comprise generally conventional hardware such as the Hughes HS 601. They may include features disclosed in GB-A-2 288 913.

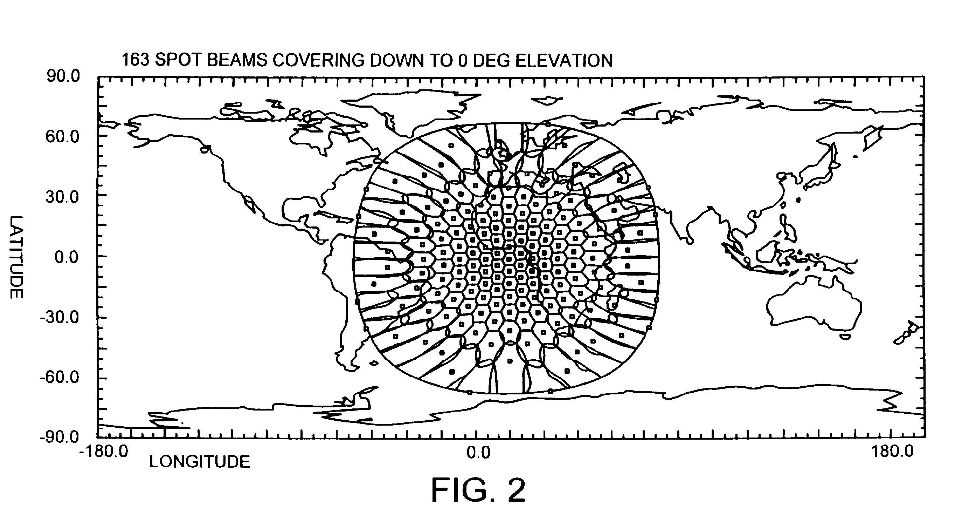

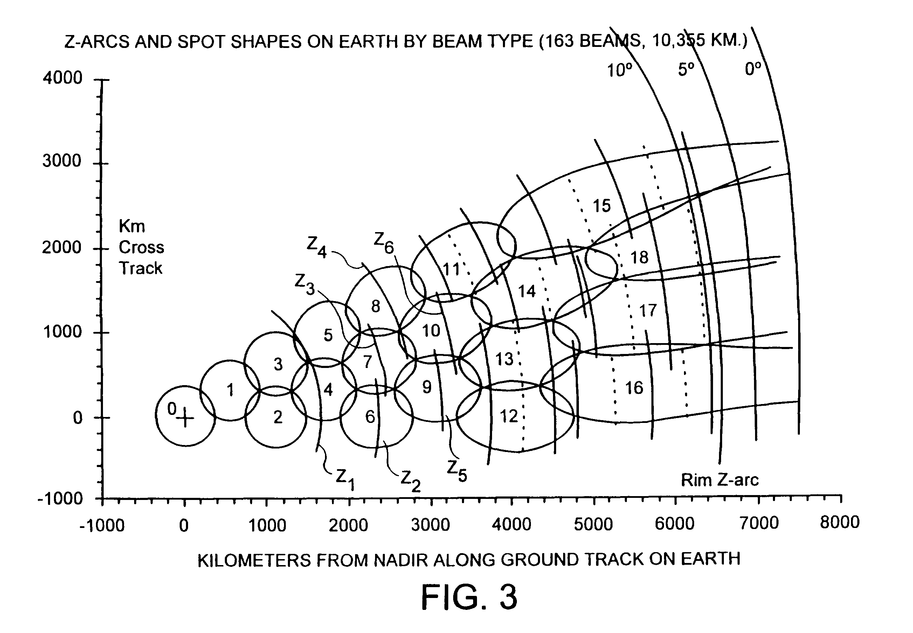

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. Referring to Figure 2, in the ICO™ satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3.

The satellites are controlled by means of a satellite control centre (SCC) 12 and a telemetry tracking and control station (TT&C) 13, which are connected to a network management centre (NMC) 14 through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

**Channel Configuration**

During a telephone call, each of the user terminals communicates with a respective SAN via the satellites. A full duplex communication path is provided between the UT and the SAN. As referred to herein, communication from the SAN to the UT via the satellite is referred to as a "downlink", and communication directed from the UT via the satellite to the SAN is referred to as an "uplink". As will be explained in more detail hereinafter, the signals may travel over diverse paths between UT 1 and SAN 1 via satellite 3a or 3b or both of them concurrently.

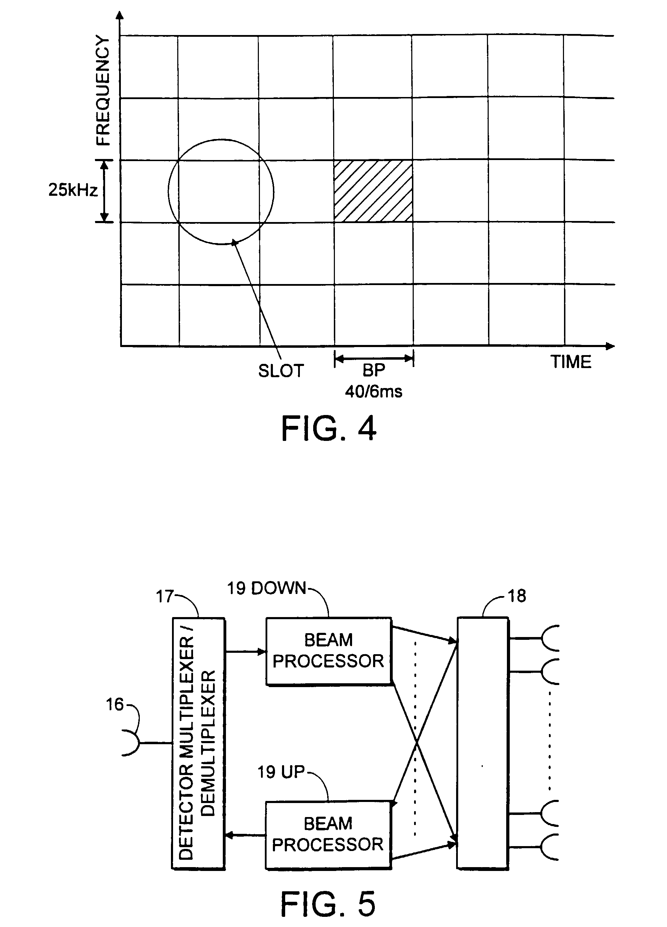

The general configuration of the transmitted signals is similar in some respects to those used for conventional GSM transmissions in a PLMN and makes use of a frequency diverse time division multiple access (TDMA) scheme. For speech transmission, data is sent in a traffic channel TCH. Each TCH is provided with an associated slow associated control channel or SACCH. The configuration of these channels in the TDMA scheme will now be described in more detail. The basic unit of transmission between the SAN and UT is a series of about 100 modulated digital symbols, which is referred to as a burst. Bursts each have a finite duration and occupy a finite part of the radio spectrum. Thus, they are sent in time and frequency windows which are referred to as slots. The slots are positioned e.g. every 25kHz and recur in time every 40/6 ms (6.667ms). The duration of each slot is referred to as a burst period or BP. A graphical representation of a slot in the time and frequency domain is shown in Figure 4.

Each TCH consists of one slot every 6 BP and comprises a cycle of 25 slots. The SACCH is multiplexed over 12 consecutive slots. Two SACCH blocks are transmitted for every 25 slot cycle.

A fast associated control channel FACCH is used during call setup and handovers. An FACCH occupies the same resources as a TCH and, if necessary, an FACCH will "steal" bursts from the TCH being used. For this reason the term FACCH will only be used when the signalling function of the FACCH is to be emphasised.

It will be appreciated that with this configuration, 6 TCHs can be interleaved due to the fact that each TCH consists of a slot every 6 BP. The resulting interleaved structure thus provides a 40 ms frame of 6 TCHs every 6 BP.

In addition to the channels TCH/SACCH for the individual UTs, a downlink broadcast control channel BCCH is broadcast from each satellite to all UTs within a particular cell. The BCCH provides information which identifies the cell to the UT, which is received by the UT in idle mode i.e. when no call is being made. As each cell has is own BCCH, the relative signal strengths of the BCCHs at the UT can be used to determine which cell is to be used for TCH/SACCH communication with the UT. Other system information may be transmitted to the UTs of a particular cell in the BCCH in a similar manner to GSM. The BCCH message consists of a number e.g. 4 slots equally spaced every 100 BP. The UT also uses the quality of the BCCH to determine whether a mobile-originating call can be made. This process will be described in detail below.

A common downlink paging logical channel PCH is provided for each cell. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH may consist of 1 to 10 slots every 25 BP and the AGCH may consist of e.g. 2, 4, 6, 8, 10 or 12 slots every 25 BP.

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

The SAN 1 to satellite 3a, 3b uplinks are located in a frequency band in the region of 5 GHz and the corresponding downlinks are in the region of 7 GHz. The satellite 3a, 3b to UT 1 downlinks are in the region of 2.1 GHz and the corresponding uplinks are in the region of 1.9 GHz, although the invention is not restricted to these frequencies. In this example, the individual TCH/SACCHs and BCCHs are assigned constant individual 25kHz wide frequency bands to provide a TDMA slot sequence as explained with reference to Figure 4.

**Satellite**

A schematic diagram of the major signal processing components of each satellite is given in Figure 5. Signals transmitted from one of the SANs are received by antenna 16 and directed to a detector/multiplexer/de-multiplexer circuit 17. It will be understood that the signal transmitted from the SAN to the satellite contains a large number of TCH/SACCHs that are to be directed to individual UTs by the satellite. To this end, the satellite includes an array 18 of a plurality (for example 163) of antennas that produce individual spot beams that correspond to a cellular configuration as previously described. A beam forming processor circuitry configuration 19 receives the various TCH/SACCHs that are demultiplexed by circuit 17 and assembles them into multiplexed signals directed on 163 outputs to the spot beam antennas 18.

For signals on the uplink from the individual UTs to the SAN, the various transmissions are received by the spot beam antennas 18 and directed to processing circuitry 19 which combines the various channels and passes them to the multiplexer configuration in circuit 17 for transmission through the antenna 16 to the SAN. It will be understood that the foregoing description of the satellite circuitry is schematic and for further details, reference is directed to GB-A-2 288 913 supra.

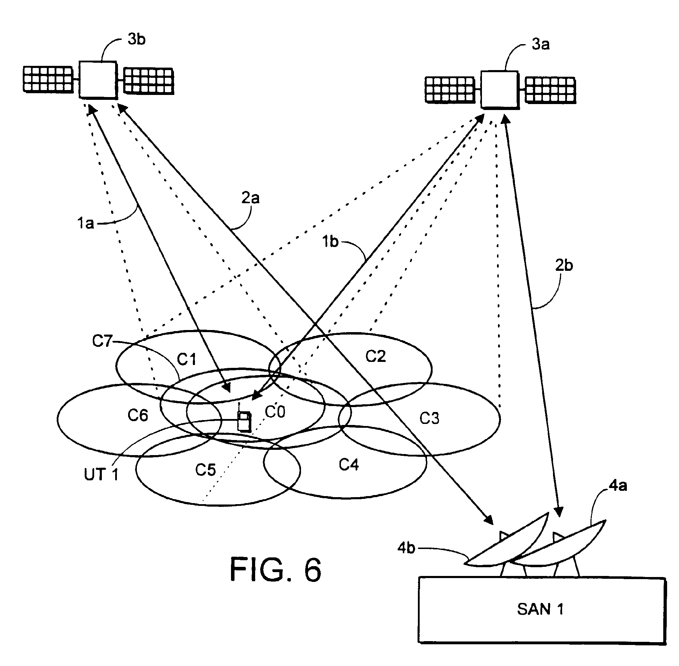

An example of cells C0 - C6 produced by the footprints of seven of the spot beams from antenna 18 of satellite 3a is shown in Figure 6. Also, one of the spot beams from satellite 3b is shown, which produces cell C7. The other beam footprints are omitted for purposes of clarity. The diverse communication paths between SAN 1 and UT 1 are shown. As previously explained, one path 1a, 2a extends between antenna 4a and UT 1 via satellite 3a. The other path 1b, 2b extends between antenna 4b and UT 1 via satellite 3b. These diverse paths make use of cells C0 and C7 of the satellites 3a and 3b.

## User terminal (UT 1)

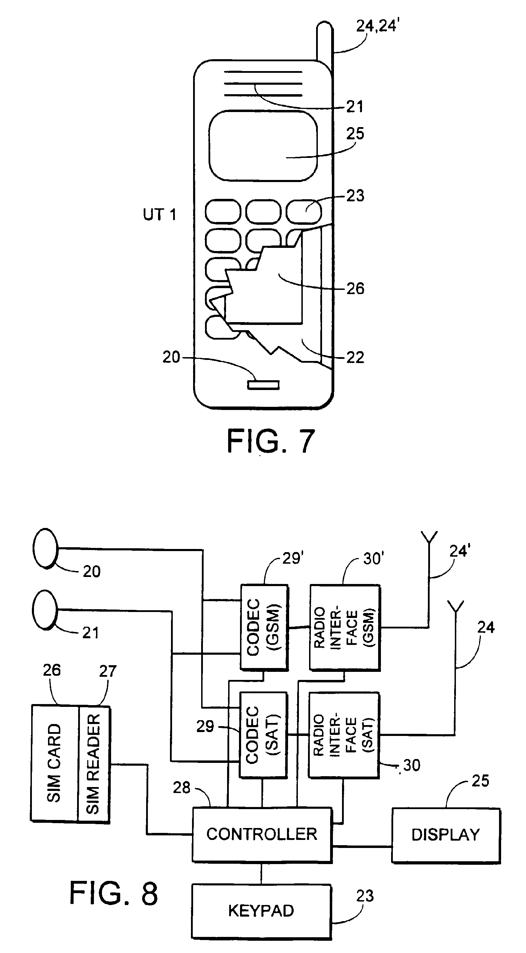

The mobile user terminal UT 1 is shown in more detail in Figures 7 and 8. It comprises a hand held device which is generally similar to a mobile telephone used for conventional terrestrial GSM networks. It is powered by a rechargeable battery (not shown) and is configured to operate either with the local terrestrial cellular network or to roam to the satellite network. Thus, in the example shown in Figure 1, the mobile handset UT 1 can operate either according to a land-based GSM protocol or according to the satellite network protocol. As shown in Figure 5, the handset comprises a microphone 20, an earpiece 21, a battery 22, a keypad 23, antennas 24, 24' and a display 25. The handheld unit UT 1 also includes a subscriber identification module (SIM) smartcard 26. The circuit configuration of the handset UT 1 is shown in block diagrammatic form in Figure 8. The SIM card 26 is received in an SIM card reader 27 coupled to a controller 28, typically a microprocessor. The microphone and loudspeaker 20, 21 are coupled to first and second codecs 29, 29' coupled to conventional radio interfaces 30a, 30b connected to the antennas 24, 24' so as to transmit and receive communication signals, in a manner well known per se. The frequency synthesizer used by the radio interfaces 30a, 30b have a frequency accuracy of 3.5ppm. This gives a maximum tuning error for 2GHz signals from a satellite 3a, 3b of 7kHz. The handset is capable of dual mode operation, with the codec 29, radio interface 30 and antenna 24 being used with the satellite network, and corresponding circuits 29', 30' and 24' being used with the GSM PLMN 9. Amongst other things, the controller 28 can monitor the quality of received signals from the satellite network, as will be explained in more detail later.

The receiver bandwidth of the UT 1 is 18kHz to accommodate signals modulated at 18 ksymbols/s.

## Satellite base station (SBS 1)

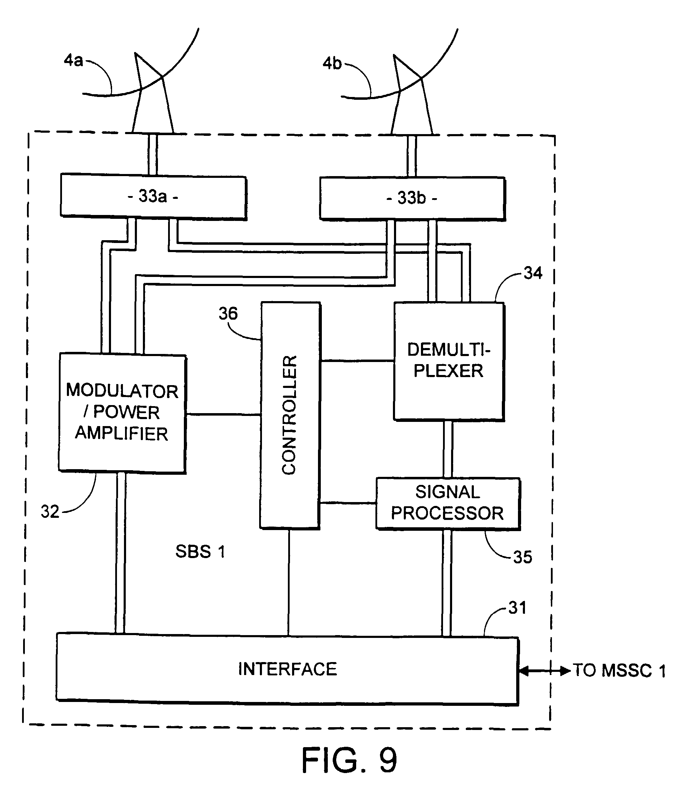

The configuration of the satellite base station SBS1 at SAN will now be described in more detail with reference to Figure 9. SBS1 comprises a network interface 31 providing an interface to MSSC 1, a modulator/power amplifier system 32, first and second feed units 33a, 33b for the dish antennas 4a, 4b, a de-multiplexer 34, a signal processing unit 35 and a controller 36. As previously explained, SAN 1 may include five dish antennas and the connections for only two of them are shown in Figure 7 in order to simplify the explanation.

The interface 31 receives communication signals from MSSC 1, routed from one of the various networks either through gateway GW 1 (Figure 1) or via the backbone network 5. The interface 31 reformats the signals for transmission to the UTs. Several calls are simultaneously supplied to the modulator/power amplifier system 32 and an interleaved TCH/SACCH is produced under the control of controller 36. A number of TCH/SACCHs are produced concurrently on different frequency bands and are fed to either one or both of the antennas 4a, 4b for onward downlink transmission via the satellites to individual user terminals. The feed units 33a, 33b feed the signals to the antennas 4a, 4b.

The antennas also receive uplink signals from the satellites and each feed unit 33a, 33b includes power combiners for combining the signals from the modulator/power amplification system 32 and a circulator for isolating the demultiplexer 34 from the combined signals and directing the combined signals to the respective antennas 4a, 4b.

Uplink signals received from the satellites are directed by the feed units 33a, 33b to the demultiplexer 34, which demultiplexes received uplink TCH/SACCHs and feeds the resulting signals via the signal processing unit 35 to the interface 31 for onward transmission to MSSC 1. The signal processing unit 35 extracts data from the received signals, which are fed to the controller 36 which in turn provides control data for UT1, which is modulated by modulator 32 onto signals transmitted to the UT, as will be described in more detail later.

## Service provision

The described network can provide service to subscribers in a number of different ways. For example, communication may be provided from UT 1 to UT 2 using the satellite backbone network 5. Alternatively, telephone communication can be established between the telephone set 7 and UT 1 either via SAN 1 and the satellite network, or, through PLMN 9, antenna 10 and link 11. For further description of service options, reference is directed to EP-A-0869628.

## Radio link configuration

The TDMA frames which make up the TCH/SACCH, need to achieve synchronisation in order to achieve a satisfactory radio link between the SAN and UT 1. In the network described herein, link control is carried out referenced to each satellite, to ensure that integrity of the TDMA frame structure is maintained at the satellite, notwithstanding transmission delays to and from the satellite and Doppler shifts in frequency due to orbital motion of the satellite. It can be shown that choosing the satellite as the reference position reduces the overall complexity of the link control arrangements.

The issues associated with timing delays and Doppler shift will be considered in turn. Considering timing delays, for a terrestrial, cellular, mobile telephone network, the signal typically takes a few microseconds to travel from a base transmitter site antenna to a mobile station. Consequently, the transmitted TDMA time slot pattern is generally retained at the mobile station. A typical round trip delay for a 35km cell is of the order of ¼ slot. However, in a satellite mobile telephone system with the satellites 3a, 3b in a medium earth orbit, the time taken for signals to travel between a satellite 3a, 3b and a UT 1 is longer than a time slot. In the case of a satellite orbiting at 10 355km, the one way propagation time to the satellite's nadir (where the satellite is seen at an elevation of 90° on the Earth) is approximately 34.5 ms, which is comparable with the previously described 40ms frame duration. This situation is further complicated by there being a significant difference between the path length to the cell at the nadir and the path lengths to the cells at the edge of the satellite's footprint. For a satellite orbiting at 10 355km, the one way propagation time to a UT which sees the satellite at 0° elevation is approximately 51.6 ms. This leads to significant differences in the times at which bursts arrive at UTs and in the times when UTs are required to transmit in order for their signals to fit in with the TDMA frame structure at the satellite.

As previously mentioned, the up and downlink traffic channel signals are to be nominally synchronised in timing and carrier frequency at the satellite. In relation to timing synchronisation, this means that path delay variations on links to individual UTs need to be compensated as will now be explained.

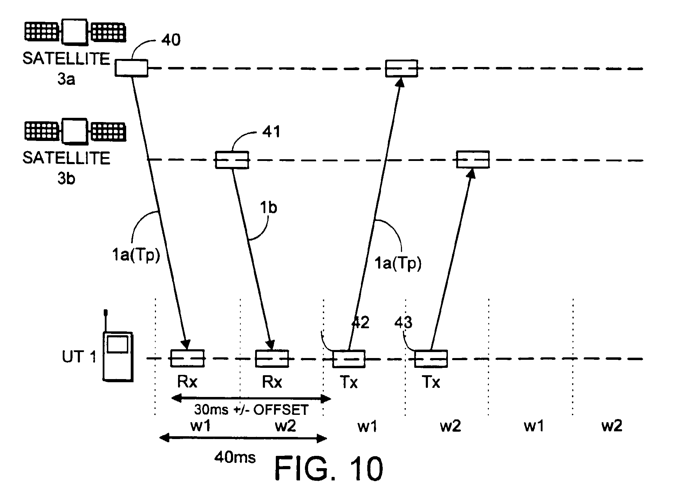

Referring to Figure 10, the transmission of successive downlink TDMA bursts 40, 41 from satellites 3a, b over paths 1a,b, to UT 1 is shown together with uplink bursts 42,43 from the UT to the satellites. The bursts in this example have a duration of 40/6ms (6.667ms) as previously discussed, and form part of the TCH/SACCH. At UT 1, each 40ms frame N is defined as two 20ms diversity windows w1, w2 for communication with the two satellites 3a,b. Considering the downlink burst 40 transmitted from satellite 3a, it is transmitted at a time determined by the synchronisation pattern that is maintained at satellite 3a, over path 1a to UT 1 and received within the 20ms reception window w1. A transmission delay Tp occurs over the path 1a between the satellite 3a and UT 1. The user terminal UT 1 is configured to transmit an uplink burst 42 after a nominal, predetermined time delay D following reception of the downlink burst 40. The uplink burst 42 also is subject to the transmission delay Tp as it travels to the satellite 3a. The time delay D needs to be selected so that the uplink burst 42 is received at the satellite 3a at a time which fits into the periodic pattern of the TDMA structure at the satellite 3a, order to maintain synchronisation at the satellite. In this example, the time delay D is nominally 30ms but is subject to an offset $\pm\varepsilon_t$ to account for variations in location of the UT, as will be explained hereinafter.

Communication between the satellite 3b and the user terminal UT 1 occurs in a similar way. The downlink TDMA burst 41 is received in diversity window w2 at UT 1 from satellite 3b over path 1b and the uplink burst 43 is transmitted to the satellite 3b by the UT after a delay $D\pm\varepsilon_t$ so as to maintain synchronisation at the satellite 3b. Suitable values for $\varepsilon_t$ for each satellite path are selected individually, as explained hereinafter.

Compensation to achieve the necessary synchronisation is carried out by referencing the timing for bursts transmitted on the path between the satellite and the UT to one of a number of different individual transmission delay values To for which a zero offset $\varepsilon_t$ is required . These different, individual transmission delay values map onto the surface of the Earth as arc-shaped contours Z shown in Figure 3. The location of the UT is considered in relation to one of these contours. When the UT is located on the contour, the timing delay corresponds to the individual value associated with the contour and the value of the timing offset $\varepsilon_t$ needed is zero in order to maintain synchronisation of the uplink and downlink bursts at the satellite. When the UT is positioned away from the contour, a timing offset $\varepsilon_t$ is needed relative to the value at the contour, to compensate for the longer transmission path length between the satellite and the UT. Since the arc-shaped contours Z of constant time delay require by definition, zero timing offset, the zero-offset arcs are referred to as Z-arcs.

In this example, each Z-arc delay value defines a path delay class which lies within +/- 1.4 ms of that value, so that 17 delay classes cover the 163 spot beams. Figure 3 shows Z-arcs $Z_n$ superimposed onto the spot beam types. Beam types 0 to 5, for example, have a path with delay variation of only 2.2 ms, and are therefore covered by a single Z-arc. In beam spots with more than one delay class, dotted arcs show the boundaries between delay classes.

The timing offset, when referenced to the Z-arc, is given by:

$$\varepsilon_t = 2(T_p - T_0) \qquad (1)$$

The factor of two deals with the fact that compensation is needed for both the uplink and the downlink path between the UT and the satellite.

The offset $\varepsilon_t$, which, in this example has a maximum value of +/- 1.4 ms, can be calculated by SBS 1 and periodically sent to UT 1. The SBS 1 knows the Z-arc value corresponding to the delay class to which the UT 1 has been allocated. It can determine the delay between itself and satellite 3a by sending and receiving loop-back transmissions. Other delays within the system can be measured or details obtained from the relevant equipment manufacturer, for example, in the case of satellite transponder delays, from the satellite manufacturer, and this information supplied to the SBS 1. Since the SBS 1 knows the various offsets (i.e. the delay D and others) applied by the UT between the received and transmitted bursts, it can use a received burst from the UT to calculate the actual path delay between the SBS and UT 1.

As previously mentioned, a Doppler shift occurs in the frequency of the bursts transmitted between each satellite 3a,b and UT 1, which unless corrected, can result in bursts shifting in the frequency domain from one allocated slot to another. Compensation in the frequency domain is carried out by defining Z-arcs of zero Doppler frequency offset and performing compensation at UT 1 and at SBS 1 in the same manner as described herein for timing errors, but in respect of errors caused by Doppler shifts. Thus at SBS 1, a frequency pre-compensation and a frequency offset $\varepsilon_d$ is computed relative to a Doppler Z-arc, where:

$$\varepsilon_d = 2(E_d - E_0) \qquad (2)$$

$E_d$ is the Doppler shift for bursts on the path 1a between the satellite 3a and the UT 1, and
$E_0$ is the Doppler shift to the Z-arc. $E_d$ and $E_0$ are representations of Doppler shifts are ratios of the shift to the nominal frequency (frequency shift/ transmit frequency).

For BCCH transmissions, the nominal transmission frequency $f_0$ is modified by the factor $E_0$ so that the frequency of the BCCH transmission is the nominal frequency $f_0$ when measured on the Doppler Z-arc to which the $E_0$ value relates.

**Penetration control**

The ICO™ network permits downlink transmissions to be made so as to achieve three different levels of penetration - high penetration (HPN), medium penetration (MP) and nominal penetration (NP). This is described in more detail in WO98/23045. HPN can be used to page a user terminal when it is shielded for example by a building in order to leave a message for the user that a call attempt is being made. The MP mode can be used to transmit signalling channels and paging services, including the BCCH and the PCH. Nominal penetration is used for speech channels usually under conditions of line of sight. MP mode signals have a greater link margin than NP mode signals and HPN mode signals have a greater link margin than MP mode signals.

**BCCH Acquisition**

A UT 1 acquires system time and frequency information from the BCCH using a combination of energy-profile on BCCH signals, fast fourier transforms on frequency control channel signals and correlation with synchronisation data in the BCCH signals. The BCCH comprises a burst every 25 timeslots which is transmitted at a higher power level than traffic channel bursts. The frequency control channel comprises, for example, two bursts of unmodulated carrier in every 25 timeslots, the frequency control channel bursts are emitted at a fixed relative position with respect to the BCCH e.g. immediately following a BCCH burst.

For initial acquisition, the UT's receiver tunes between the nominal BCCH frequencies used in the system. Since the BCCH transmissions are pre-compensated for Doppler shift, the measured frequency of a BCCH, in the cell to which it is directed, will be only 1.1kHz. However, the UT 1 may be tuned up to 7kHz from the nominal BCCH frequency. This gives a maximum tuning error of 8.1kHz which means that even in the worst case, the BCCH signal will fall within the 9kHz UT receiver bandwidth.

The in-phase and quadrature components of received signals are sampled at the symbol frequency and then the instantaneous power is calculated from these samples. The power values are averaged over a moving window having a duration of one burst. A BCCH burst is identified when the average power exceeds a threshold value.

When the threshold value has been exceeded, the identification of a BCCH burst is checked. First, using the timing of the provisionally identified BCCH burst as a reference, a window is opened in the middle of the period expected to be occupied by the frequency control channel bursts and the received signal sampled. A fast fourier transform of these samples is then calculated. If the frequency control bursts are present, a component at the carrier frequency, allowing for the effects of Doppler shift ($\pm$1.1kHz maximum offset), should appear in the fast fourier transform result.

If a potential carrier is detected in the fast fourier transform result, the UT's local oscillator synthesizer can be adjusted exactly to the correct frequency. The BCCH signal is then correlated with a synchronisation word to identify a reference point in the BCCH signal.

Once the UT 1 has synchronised with the BCCH, it can decode the information contained in the BCCH. This information includes the identity of the current cell, the location of the satellite's nadir, the satellite transmitting the decoded BCCH, the identity of neighbouring cells and the BCCH frequencies for those cells. The UT 1 then tries to detect and synchronise with the BCCHs of the neighbouring cells.

The UT 1 compares the strengths of the BCCHs detected and determines that it is in the cell, served by the strongest BCCH signal.

Once the UT 1 has selected a BCCH, it decodes the BCCH information. The information includes the propagation time or times ($T_0$) between the satellite and the or each frequency Z-arc crossing the cell and the or each Doppler shift ($E_0$) for the or each Doppler Z-arc crossing the cell. The UT 1 will generally not be on a Z-arc and allowance must therefore be made for variations in actual propagation time ($T_P$) corresponding to the UT's position relative to the closest Z-arc.

After decoding the BCCH information, the UT 1 transmits a random access channel (RACH) burst via the satellite 3a, 3b to the SBS 1 serving the satellite 3a, 3b. The RACH has a dedicated frequency different from that used for other channel types. On receiving the RACH burst, the SBS 1 calculates $2(T_P - T_0)$ and $2(E_d - E_0)$ and transmits them to the UT 1 as described above.

Many modifications and variations fall within the scope of the invention. For example, although the method of link control has been described in relation to the ICO™ system, it will be appreciated that it could be equally well applied to any of the satellite mobile telecommunications networks described in Scientific American *supra.*

## Claims

1.  A method of transmitting broadcast control channel signals in a satellite mobile telephone system, the method comprising the steps of:

    determining the Doppler shift experienced by signals from a satellite to a position in a cell served by the satellite; and
    transmitting signals from a base station to the satellite so as to cause the satellite to transmit a broadcast control channel signal to said cell using a frequency set in dependence on said Doppler shift to compensate therefor.

2.  A mobile station for use in a satellite mobile telephone system, in which a broadcast control channel signal is transmitted according to claim 1, the mobile station including a receiver, including a local oscillator and having a predetermined bandwidth which a greater than twice the sum of the tuning inaccuracy of the local oscillator and the greatest uncompensated Doppler shift experienced in a cell served by said satellite, and a controller, wherein the controller is configured for causing the local oscillator to tune the receiver to one frequency only when searching for a broadcast control channel having a particular nominal frequency.

FIG. 1

163 SPOT BEAMS COVERING DOWN TO 0 DEG ELEVATION

LATITUDE

LONGITUDE

FIG. 2

EP 1 052 788 A1

Z-ARCS AND SPOT SHAPES ON EARTH BY BEAM TYPE (163 BEAMS, 10,355 KM.)

FIG. 3

FIG. 4

FIG. 5

FIG. 6

FIG. 7

FIG. 8

FIG. 9

SATELLITE 3a

SATELLITE 3b

40

41

1b

1a(Tp)

1a(Tp)

UT 1

42

43

Rx

Rx

Tx

Tx

30ms +/- OFFSET

w1

w2

w1

w2

w1

w2

40ms

FIG. 10

EP 1 052 788 A1

European Patent
Office

**EUROPEAN SEARCH REPORT**

Application Number

EP 99 30 3731

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 659 545 A (SOWLES ET AL.)<br>19 August 1997 (1997-08-19)<br>* claims 1-23 * | 1,2 | H04B7/185 |
| Y | US 5 640 166 A (SIWIAK)<br>17 June 1997 (1997-06-17)<br>* claims 1-13; figures 1-6 * | 1,2 | |
| A | US 5 613 193 A (ISHAKAWA ET AL.)<br>18 March 1997 (1997-03-18)<br>* column 2, line 63 - column 3, line 37;<br>figures 1-9 * | 1,2 | |
| A | EP 0 848 509 A (ALCATEL)<br>17 June 1998 (1998-06-17)<br>* column 1, line 1 - column 4, line 32 * | 1,2 | |
| A | US 3 940 695 A (SICKLES, II)<br>24 February 1976 (1976-02-24)<br>* column 2, line 22 - line 46 *<br>----- | 1,2 | |
| | | | **TECHNICAL FIELDS SEARCHED (Int.Cl.7)**<br><br>H04B |

The present search report has been drawn up for all claims

| Place of search | Date of completion of the search | Examiner |
|---|---|---|
| THE HAGUE | 27 December 1999 | Bischof, J-L |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

&.................................................................................
& : member of the same patent family, corresponding
   document

EPO FORM 1503 03.82 (P04C01)

18

**ANNEX TO THE EUROPEAN SEARCH REPORT
ON EUROPEAN PATENT APPLICATION NO.**                    EP 99 30 3731

This annex lists the patent family members relating to the patent documents cited in the above-mentioned European search report.
The members are as contained in the European Patent Office EDP file on
The European Patent Office is in no way liable for these particulars which are merely given for the purpose of information.

27-12-1999

| Patent document cited in search report | | Publication date | Patent family member(s) | | Publication date |
|---|---|---|---|---|---|
| US 5659545 | A | 19-08-1997 | NONE | | |
| US 5640166 | A | 17-06-1997 | CN | 1228892 A | 15-09-1999 |
| | | | EP | 0920748 A | 09-06-1999 |
| | | | WO | 9810532 A | 12-03-1998 |
| US 5613193 | A | 18-03-1997 | JP | 2953260 B | 27-09-1999 |
| | | | JP | 7022990 A | 24-01-1995 |
| EP 848509 | A | 17-06-1998 | FR | 2757339 A | 19-06-1998 |
| | | | CA | 2222408 A | 12-06-1998 |
| | | | JP | 10200471 A | 31-07-1998 |
| US 3940695 | A | 24-02-1976 | NONE | | |

EPO FORM P0459

For more details about this annex : see Official Journal of the European Patent Office, No. 12/82